# EUROPÄISCHE PATENTANMELDUNG

(11) **EP 2 952 953 A1**
(43) Veröffentlichungstag der Anmeldung: **09.12.2015**
(21) Anmeldenummer: 15001630.1
(22) Anmeldetag: 01.06.2015
(51) Int. Cl.: G02B 27/64, H04N 5/232

(54) **VERFAHREN ZUM AUSRICHTEN EINES KAMERASYSTEMS AUF EIN ZIELOBJEKT UND KAMERASYSTEM**

(30) Priorität: 04.06.2014 DE 102014008385
(71) Anmelder: MBDA Deutschland GmbH, 86529 Schrobenhausen (DE)
(72) Erfinder: ZOZ, Jürgen, D-86316 Friedberg (DE); Baumann, Ingo, D-80803 München (DE)
(74) Vertreter: Avenhaus, Beate

(57) **Zusammenfassung**

Gemäß einem Aspekt der vorliegenden Erfindung ist ein Verfahren zum Ausrichten eines Kamerasystems auf ein Zielobjekt angegeben. Das Kamerasystem umfasst einen Bildsensor und eine Anzeigevorrichtung, wobei ein Anzeigebereich (12) der Anzeigevorrichtung wenigstens einem Teilbereich eines abbildbaren Bildbereichs (10) des Bildsensors entspricht. Das Verfahren umfasst die Schritte:
a) Bereitstellen (S1) eines Bildstroms des abbildbaren Bildbereichs (10), wobei im abbildbaren Bildbereich (10) ein Zielobjekt vorhanden ist;
b) Grobausrichten (S2) des Anzeigebereichs (12) mit dem Zielobjekt, umfassend eine Kompensation eines ersten Bewegungsanteils des Bildsensors in einem ersten Frequenzbereich; und
c) Feinausrichten des Anzeigebereichs (12) mit dem Zielobjekt, umfassend:
c1) Bestimmen (S3) einer zweidimensionalen Zielposition oder Blickrichtung (13); und
c2) Bestimmen (S4) einer relativen Verschiebung der Zielposition oder Blickrichtung (13) aus einem zweiten Bewegungsanteil des Bildsensors in einem zweiten Frequenzbereich, der niedriger als der erste Frequenzbereich ist.

## Beschreibung

### TECHNISCHES GEBIET

Die vorliegende Erfindung betrifft ein Verfahren zum Ausrichten eines Kamerasystems auf ein Zielobjekt und betrifft ein Kamerasystem, insbesondere ein Kamerasystem, mit dem das Verfahren zum Ausrichten eines Kamerasystems auf ein Zielobjekt ausgeführt wird.

### HINTERGRUND DER ERFINDUNG

Handgeführte oder schultergestützte optronische und digitale bildverarbeitende Systeme können ohne mechanische Stabilisierung oft nicht mit ausreichender Genauigkeit ausgerichtet werden, da durch Gewichtsbelastung, Atmung, Stress, etc. eines Benutzers eine unwillkürliche Bewegung des Systems erfolgen kann. In der Fotographie ist eine Bildstabilisierung bekannt. Diese in der Fotografie übliche Bildstabilisierung hat aber den Nachteil, dass die unwillkürliche Bewegung des Systems lediglich gedämpft wird, dadurch aber nicht die Ausrichtung in der Genauigkeit erhöht wird.

### STAND DER TECHNIK

Die US 2008/0158371A1 zeigt und beschreibt ein Stabilisierungssystem für Videobilder, wobei ein in die Kamera eingebauter Bildstabilisator vorgesehen ist, der einerseits entweder als digitales Bildstabilisierungssystem die Verschlussgeschwindigkeit oder den ISO-Wert erhöht oder der als optisches Bildstabilisierungssystem arbeitet und eine interne Eigenschaft der Videokamera beeinflusst oder der durch Bewegen des Bildsensors das Bild stabilisiert. Zum Anderen erfolgt die Kompensation der Kamerabewegung dadurch, dass die Kamera gegenüber der bewegten Plattform mittels einer entsprechenden Aufhängung mechanisch stabilisiert wird.

Die US 2008/0231718A1 zeigt und beschreibt ein Verfahren und eine Vorrichtung zur Bildstabilisierung bei Videoaufnahmen. Die Stabilisierung des Bildes erfolgt mit einer Bildverarbeitungseinrichtung, in der zwei aufgenommene Bilder miteinander verglichen werden und daraus eine Verschiebung der aufgenommenen Szene aufgrund von Kamerawackeln durch Vergleich von zwei Teilbildern durchgeführt wird. Diese ermittelte Verschiebung wird dann entsprechend kompensiert, indem das zweite Bild um den Betrag der ermittelten Verwacklungsverschiebung entgegen der Verwacklungsrichtung zurückverschoben wird.

Die EP 1 553 758 A1 zeigt und beschreibt eine optische Vorrichtung zum Ausgleich eines Bildverwackelns, wobei eine Stabilisierungseinrichtung vorgesehen ist, die eine Einrichtung zur Ermittlung der Lagedifferenz zwischen einer tatsächlichen Lage des Bildaufnahmegeräts und einer Soll-Lage des Bildaufnahmegeräts sowie eine Kompensations-Vorrichtung zur Kompensation der Auswirkung der ermittelten Lagedifferenz auf einen abgebildeten Bildausschnitt aufweist. Dabei wird dem Anwender die Soll-Lage und die Ist-Lage des Bildaufnahmegeräts durch Markierungen auf einer optischen Anzeige angezeigt, sodass der Anwender in der Lage ist, mittels einer Neuausrichtung des Bildaufnahmegeräts die Lagedifferenz zu kompensieren.

### DARSTELLUNG DER ERFINDUNG

Aufgabe der vorliegenden Erfindung ist es daher, ein Verfahren zum Ausrichten eines Kamerasystems auf ein Zielobjekt und ein Kamerasystem bereitzustellen, die eines oder mehrere Probleme des Stands der Technik vermeiden.

Diese Aufgabe wird durch die Merkmale der unabhängigen Ansprüche gelöst. Gemäß einigen Aspekten der vorliegenden Erfindung besteht die Lösung insbesondere in der Übersetzung von groben gemessenen Bewegungen in feine Korrekturen einer Zielmarkierung oder Ausrichtung einer (virtuellen) Blickrichtung.

Gemäß einem Aspekt der vorliegenden Erfindung ist ein Verfahren zum Ausrichten eines Kamerasystems auf ein Zielobjekt angegeben. Das Kamerasystem umfasst einen Bildsensor und eine Anzeigevorrichtung, wobei ein Anzeigebereich der Anzeigevorrichtung wenigstens einem Teilbereich eines abbildbaren Bildbereichs des Bildsensors entspricht. Das Verfahren umfasst die Schritte:
a) Bereitstellen eines Bildstroms des abbildbaren Bildbereichs, wobei im abbildbaren Bildbereich ein Zielobjekt vorhanden ist;
b) Grobausrichten des Kamerasystems auf das Zielobjekt, umfassend eine Kompensation eines ersten Bewegungsanteils des Bildsensors in einem ersten Frequenzbereich; und
c) Feinausrichten des Kamerasystems auf das Zielobjekt, umfassend:
   c1) Bestimmen einer zweidimensionalen Zielposition oder Blickrichtung;
   c2) Bestimmen einer relativen Verschiebung der Zielposition oder Blickrichtung aus einem zweiten Bewegungsanteil des Bildsensors in einem zweiten Frequenzbereich, der niedriger als der erste Frequenzbereich ist und
   c3) stabilisiertes Anzeigen des Zielobjekts im Anzeigebereich basierend auf der bestimmten relativen Verschiebung der Zielposition oder der Blickrichtung.

Gemäß einem weiteren Aspekt der vorliegenden Erfindung ist ein Kamerasystem angegeben. Das Kamerasystem umfasst einen Bildsensor; eine Anzeigevorrichtung, wobei ein Anzeigebereich der Anzeigevorrichtung wenigstens einem Teilbereich eines abbildbaren Bildbereichs des Bildsensors entspricht; und eine Bildverarbeitungsvorrichtung, die eingerichtet ist, um das Kamerasystem auf ein Zielobjekt im abbildbaren Bildbereich durch eine Kompensation eines ersten Bewegungsanteils des Bildsensors in einem ersten Frequenzbereich grobauszurichten, und um das Kamerasystem auf das Zielobjekt feinauszurichten. Das Feinausrichten umfasst ein Bestimmen einer zweidimensionalen Zielposition oder Blickrichtung, ein Bestimmen einer relativen Verschiebung der Zielposition oder Blickrichtung aus einem zweiten Bewegungsanteil des Bildsensors in einem zweiten Frequenzbereich, der niedriger als der erste Frequenzbereich ist und ein stabilisiertes Anzeigen des Zielobjekts im Anzeigebereich basierend auf der bestimmten relativen Verschiebung der Zielposition oder der Blickrichtung.

Durch das erfindungsgemäße Verfahren und Kamerasystem kann eine beliebig hohe, insbesondere nur durch die Abbildungsgenauigkeit des Kamerasystems begrenzte Ausrichtung oder Einweisgenauigkeit eines Kamerasystems erreicht werden.

Weitere bevorzugte und vorteilhafte Ausgestaltungsmerkmale des erfindungsgemäßen Verfahrens und des Kamerasystems sind Gegenstand der Unteransprüche.

Bevorzugte Ausführungsbeispiele der Erfindung mit zusätzlichen Ausgestaltungsdetails und weiteren Vorteilen sind nachfolgend unter Bezugnahme auf die beigefügten Zeichnungen näher beschrieben und erläutert.

### KURZE BESCHREIBUNG DER ZEICHNUNGEN

Es zeigt:
- Fig. 1: ein Flussdiagramm des Verfahrens zum Ausrichten eines Kamerasystems auf ein Zielobjekt gemäß Ausführungsformen der Erfindung.
- Fig. 2: ein Beispiel der einzelnen Phasen bei einer Ausrichtung eines Kamerasystems auf ein Zielobjekt gemäß Ausführungsformen der Erfindung.

### DARSTELLUNG VON BEVORZUGTEN AUSFÜHRUNGSBEISPIELEN

Im Folgenden werden, sofern nicht anders vermerkt, für gleiche und gleichwirkende Elemente gleiche Bezugszeichen verwendet.

Handgeführte oder schultergestützte optronische und digital bildverarbeitende Systeme können ohne mechanische Stabilisierung oft nicht mit ausreichender Genauigkeit ausgerichtet werden, da durch Gewichtsbelastung, Atmung, Stress, etc. eine unwillkürliche Bewegung des Systems erzwungen wird. Durch digitale Stabilisierung der Sichtlinie und Übersetzung der gemessenen niederfrequenten willkürlichen Kamerabewegung auf die relative Position der Zielmarkierung kann eine hochgenaue Verfeinerung der Ausrichtung erzielt werden. Der für die Ausrichtung relevante Bildbereich ist kleiner als der Bereich, der durch den Sensor potentiell abbildbar ist.

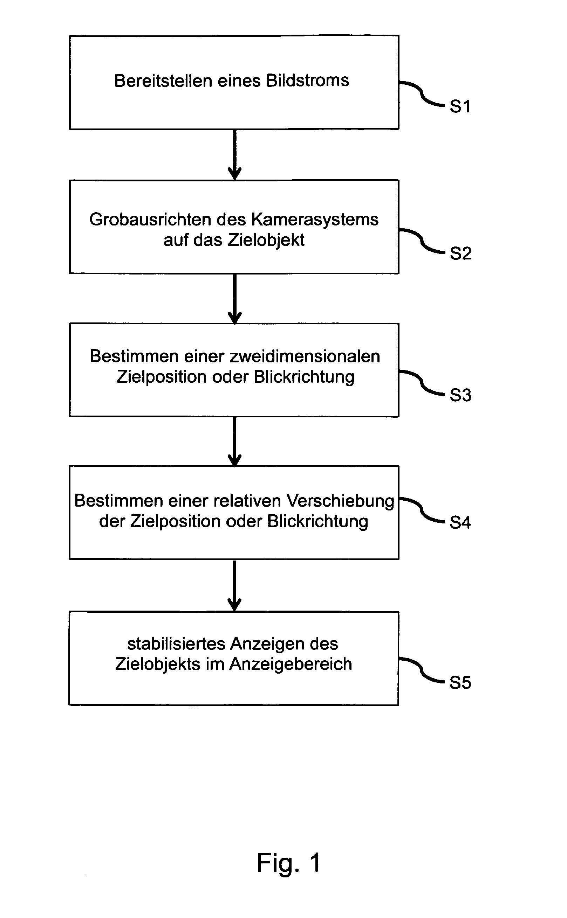

Figur 1 zeigt ein Flussdiagramm des Verfahrens zum Ausrichten eines Kamerasystems auf ein Zielobjekt gemäß Ausführungsformen der Erfindung.

Gemäß einem Aspekt der vorliegenden Erfindung ist ein Verfahren zum Ausrichten eines Kamerasystems auf ein Zielobjekt angegeben. Das Kamerasystem umfasst einen Bildsensor und eine Anzeigevorrichtung, wobei ein Anzeigebereich der Anzeigevorrichtung wenigstens einem Teilbereich eines abbildbaren Bildbereichs des Bildsensors entspricht. Das Verfahren umfasst die Schritte:
a) Bereitstellen, insbesondere ein kontinuierliches Bereitstellen, eines Bildstroms des abbildbaren Bildbereichs, wobei im abbildbaren Bildbereich ein Zielobjekt vorhanden ist (Schritt S1);
b) Grobausrichten des Kamerasystems auf das Zielobjekt, umfassend eine Kompensation eines ersten Bewegungsanteils des Bildsensors in einem ersten Frequenzbereich (Schritt S2); und
c) Feinausrichten des Kamerasystems auf das Zielobjekt (Schritte S3 bis S5), umfassend:
   c1) Bestimmen einer zweidimensionalen Zielposition oder Blickrichtung (Schritt S3);
   c2) Bestimmen einer relativen Verschiebung der Zielposition oder Blickrichtung aus einem zweiten Bewegungsanteil des Bildsensors in einem zweiten Frequenzbereich, der niedriger als der erste Frequenzbereich ist (Schritt S4); und
   c3) stabilisiertes Anzeigen (S5) des Zielobjekts im Anzeigebereich basierend auf der bestimmten relativen Verschiebung der Zielposition oder der Blickrichtung (Schritt S5).

Gemäß einigen Ausführungsformen, die mit anderen hier beschriebenen Ausführungsformen kombiniert werden können, ist oder entspricht die zweidimensionale Zielposition einer zweidimensionalen Bildposition des Zielobjekts im Bildstrom, oder die zweidimensionale Zielposition ist oder entspricht einer Markierung im Bildstrom, beispielsweise der zweidimensionalen Bildposition des Zielobjekts im Bildstrom.

Typischerweise umfasst das Verfahren weiter ein Messen der Bewegung des Bildsensors gegenüber einem Referenzkoordinatensystem, und insbesondere ein kontinuierliches Messen dieser Bewegung. Die Messung kann beispielswiese mittels wenigstens einer Messvorrichtung geschehen, die aus der Gruppe ausgewählt ist, die einen Winkelabnehmer und einen Drehratenmesser umfasst. Weiter können zusätzlich oder alternativ eine automatische Bewegungsschätzung aus den Bilddaten (Bildstrom) und/oder andere Methoden oder Mittel verwendet werden.

In einigen Implementierungen umfasst das Verfahren weiter ein stabilisiertes Anzeigen des grobausgerichteten Bildstroms auf dem Anzeigebereich.

In einigen Ausführungsformen umfasst der Schritt c1) insbesondere
i) ein initiales oder anfängliches Bestimmen der zweidimensionalen Zielposition oder der Blickrichtung im Bildstrom; und
ii) ein automatisches Bestimmen der zweidimensionalen Zielposition oder der Blickrichtung im Bildstrom durch Kompensation des ersten Bewegungsanteils des Bildsensors im ersten Frequenzbereich.

Typischerweise umfasst das initiale Bestimmen ein manuelles Bestimmen der zweidimensionalen Zielposition oder der Blickrichtung im Bildstrom über eine Eingabe von Koordinaten, ein Anzeigen und Bestätigen im Anzeigebereich, oder ein Ausrichten des Bildsensors auf die zweidimensionale Bildposition, das Zielobjekt oder die Blickrichtung. In anderen Ausführungsformen umfasst das initiale Bestimmen ein automatisches Bestimmen der zweidimensionalen Zielposition oder der Blickrichtung im Bildstrom, insbesondere über eine Datenschnittstelle.

In einigen Ausführungsformen umfasst der Schritt c2) eine Übersetzung der Bewegung des Bildsensors auf eine Bewegung der Zielposition oder Blickrichtung und ein kontinuierliches Berechnen der relativen Verschiebung der Zielposition oder Blickrichtung aus der Bewegung des Bildsensors.

Typischerweise umfasst die Übersetzung ein Umrechnen von wenigstens drei, und insbesondere von sechs Freiheitsgraden der Bewegung des Bildsensors einzeln gewichtet auf die zweidimensionale relative Verschiebung. In einigen Ausführungsformen erfolgt das Umrechnen linear als absoluter Gesamtdrehwinkel bezogen auf eine Initialposition, oder nicht-linear gewichtet mit einer aktuellen Beschleunigung des Bildsensors.

In einigen Ausführungsformen umfasst das Verfahren weiter ein Anzeigen einer erforderlichen Bewegungsrichtung des Bildsensors zur Ausrichtung einer Achse auf das Zielobjekt. Typischerweise umfasst dies ein Berechnen eines aktuellen Versatzes der Zielposition oder Blickrichtung zur Achse, und ein Anzeigen der erforderlichen Bewegungsrichtung. Beispielsweise kann die Anzeige akustisch oder visuell durch Einblendung von Information im Anzeigebereich erfolgen.

Gemäß einigen Ausführungsformen, die mit anderen Ausführungsformen kombiniert werden können, ist der erste Bewegungsanteil des Bildsensors im ersten Frequenzbereich ein hochfrequenter Bewegungsanteil, und/oder der zweite Bewegungsanteil des Bildsensors im zweiten Frequenzbereich ist ein niederfrequenter Bewegungsanteil. Beispielsweise kann der hochfrequente Anteil der Bewegung durch ein Zittern, eine Bewegung aufgrund hektischer Atmung und/oder Stöße hervorgerufen werden. Die niederfrequente Bewegung kann beispielswiese durch Gewichtsbelastung, Atmung und/oder Stress hervorgerufen werden. Insbesondere kann die niederfrequente Bewegung eine willkürliche langsame Kamerabewegung sein.

Das vorgestellte Verfahren erhöht beispielsweise die Zielgenauigkeit für hand- oder schultergestützte optische und digitale bildverarbeitende Systeme wie Einweisgeräte. Dabei sollte der maximal abbildbare Bereich des Sensors größer als der operativ relevante Bereich sein.

Gemäß einigen Ausführungsformen ist ein Verfahren zur hochpräzisen Ausrichtung von digitalen Kamerasystemen auf ein Zielobjekt angegeben. Das Verfahren kann wenigstens einige der folgenden Schritte umfassen:
1. Bereitstellung eines kontinuierlichen Bildstromes der beobachteten Szene.
2. Bereitstellung von kontinuierlichen Messungen der Bewegung des Kamerasystems gegenüber einem Referenzkoordinatensystem unter Verwendung wenigstens eines des folgenden:
   a. mit wenigstens einem Winkelabnehmer,
   b. mit wenigstens einem Drehratenmesser,
   c. mit einer automatischen Bewegungsschätzung aus den Bilddaten, und/oder
   d. durch andere Methoden.
3. Zur groben Einweisung wird bei Bedarf der Bildstrom in der horizontalen und vertikalen Position gedämpft angezeigt. Dabei wird die gemessene Bewegung des Kamerasystems so in eine Verschiebung des Bildinhalts umgerechnet, dass ein vorab wählbarer hochfrequente Anteil der Bewegung (Zittern, Bewegung aufgrund hektischer Atmung, Stöße...) kompensiert wird und der Bildstrom relativ zum Anzeigegerät stabilisiert erscheint.
4. Initiale Bestimmung der groben zweidimensionalen Bildposition des Zielobjekts oder der gewünschten Blickrichtung im kontinuierlichen Bildstrom (Initiale Aufschaltung). Die initiale Bestimmung erfolgt mittels wenigstens einem des folgenden:
   a. Manuell über
      i. eine Eingabe von Koordinaten,
      ii. ein Zeigen (Angeben) und optionales Bestätigung in angezeigten, Bilddaten (beispielsweise mittels Joystick, Mauseingabe,...), und/oder
      iii. ein Ausrichten des Kamerasystems auf ein Zielobjekt oder Blickrichtung (beispielsweise Überlappung mit Bildmitte/Fadenkreuz);
   b. Automatisch beispielsweise über eine Datenschnittstelle.
5. Kontinuierliche automatische Bestimmung der zweidimensionalen Bildposition des Zielobjekts oder der Blickrichtung im Bilddatenstrom durch Kompensation der Bewegung des Kamerasystems.
6. Kontinuierliche und stabilisierte Anzeige des Zielobjekts mit Umgebung oder der Umgebung der aktuellen Blickrichtung. Bei Bedarf mit:
   a. markierter aktueller Zielposition und/oder
   b. Markierung des zulässigen Bewegungsbereichs, bevor der Rand des Sensors erreicht wird.
7. Automatische Verfeinerung der Zielposition oder Blickrichtung durch Umrechnung der gemessenen Bewegung des Kamerasystems auf die tatsächliche relative Verschiebung der zweidimensionalen Zielposition oder Blickrichtung mit den Schritten:
   a. Manuelle Auswahl der Übersetzung der Bewegung des Kamerasystems auf die Bewegung der Zielposition oder Blickrichtung. Die Auswahl kann sich auf die Umrechnung aller sechs Freiheitsgrade der Kamerabewegung individuell gewichtet auf die zweidimensionale relative Verschiebung beziehen:
      i. Linear als absoluter Gesamtdrehwinkel bezogen auf die Initialposition,
      ii. Nicht-linear gewichtet mit der aktuellen Beschleunigung;
   b. Kontinuierliche Berechnung der relativen Änderung der zweidimensionalen Zielposition oder Blickrichtung aus der Bewegung des Kamerasystems;
   c. Kontinuierliche und bewegungsfreie (stabilisierte) Anzeige des Zielobjekts und bei Bedarf der neuen Zielposition.
8. Bei Bedarf kontinuierliche automatische Anzeige der nötigen Bewegung des Kamerasystems zur Ausrichtung einer beliebigen Achse auf das Zielobjekt (Rückstellung) mit den Schritten:
   a. Feststellung der Zielposition oder Blickrichtung im Bilddatenstrom aus den vorangegangenen Schritten;
   b. Kontinuierliche Berechnung und Anzeige des aktuellen Versatzes zur optimalen Ausrichtung
      i. akustisch, und/oder
      ii. visuell durch Einblendung von Informationen in den angezeigten Bilddatenstrom.

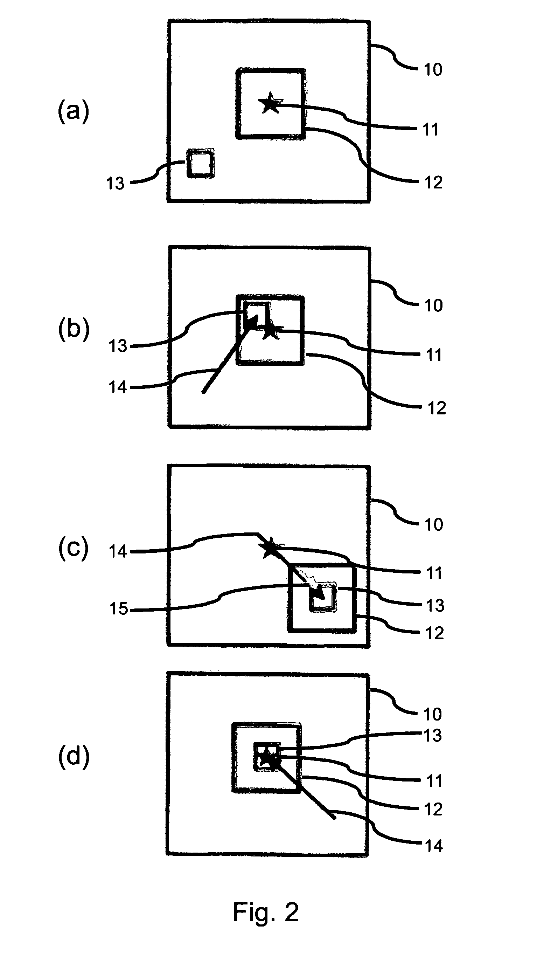

Figur 2 zeigt ein Beispiel der einzelnen Phasen bei einer Ausrichtung in einem Verfahren eines Kamerasystems auf ein Zielobjekt gemäß weiteren Ausführungsformen der Erfindung.

Figur 2(a) zeigt dabei eine Ausgangssituation, beispielsweise in einer Situation nach Einschalten und grober Ausrichtung des Kamerasystems. Gezeigt ist die Ausgangssituation mit einem abbildbaren Bereich 10 des Bildsensors und einer Sensormitte oder Ausrichtachse 11 des Sensors. Der beispielsweise auf der Anzeigevorrichtung angezeigte Bereich 12 ist um die Sensormitte 11 platziert. Das Ziel oder die gewünschte Blickrichtung 13 befindet sich anfangs außerhalb des angezeigten Bereichs 12, jedoch in diesem Beispiel innerhalb des abbildbaren Bereichs 10.

Figur 2(b) zeigt ein Beispiel einer groben Einweisung, beispielsweise eine Situation nach einer groben Ausrichtung des Kamerasystems auf das Ziel. Durch eine Kamerabewegung oder eine Bewegung des Bildsensors (mit dem Bezugszeichen 14 bezeichnet) wird der Bildinhalt bewegt. In diesem Beispiel wird das Ziel oder die gewünschte Blickrichtung 13 in den angezeigten Bereich 12 bewegt.

Figur 2(c) zeigt eine Verfeinerung mit einer Bewegung des Bildinhalts beispielsweise durch eine Kamerabewegung (Bezugszeichen 14) und einer relativen Bewegung des Zielpunkts oder der Blickrichtung (Bezugszeichen 15).

Figur 2(d) zeigt eine Rückstellung mit einer weiteren Bewegung des Bildinhalts beispielsweise durch eine Kamerabewegung (Bezugszeichen 14). Gezeigt ist insbesondere eine Situation nach einer Bewegung des Kamerasystems zur Deckung der Bildmitte mit dem Ziel.

Gemäß einem weiteren Aspekt der vorliegenden Erfindung ist ein Kamerasystem angegeben. Das Kamerasystem umfasst einen Bildsensor; eine Anzeigevorrichtung, wobei ein Anzeigebereich der Anzeigevorrichtung wenigstens einem Teilbereich eines abbildbaren Bildbereichs des Bildsensors entspricht; und eine Bildverarbeitungsvorrichtung, die eingerichtet ist, um das Kamerasystem auf ein Zielobjekt im abbildbaren Bildbereich durch eine Kompensation eines ersten Bewegungsanteils des Bildsensors in einem ersten Frequenzbereich grobauszurichten, und um das Kamerasystem auf das Zielobjekt feinauszurichten. Das Feinausrichten umfasst ein Bestimmen einer zweidimensionalen Zielposition oder Blickrichtung; und ein Bestimmen einer relativen Verschiebung der Zielposition oder Blickrichtung aus einem zweiten Bewegungsanteil des Bildsensors in einem zweiten Frequenzbereich, der niedriger als der erste Frequenzbereich ist

Gemäß einigen Ausführungsformen kann das Zielobjekt im Anzeigebereich basierend auf der bestimmten relativen Verschiebung der Zielposition oder der Blickrichtung stabilisiert angezeigt werden.

In typischen Ausführungsformen ist das Kamerasystem eingerichtet, um das oben beschriebene Verfahren auszuführen, insbesondere unter Verwendung geeigneter Mittel wie einem Prozessor und/oder einem optomechanischen Getriebe als Zielhilfsmittel.

Bezugszeichen in den Ansprüchen, der Beschreibung und den Zeichnungen dienen lediglich dem besseren Verständnis der Erfindung und sollen den Schutzumfang nicht einschränken.

### Bezugszeichenliste

Es bezeichnen:
- 10: abbildbarer Bereich
- 11: Sensormitte
- 12: angezeigter Bereich
- 13: Ziel/gewünschte Blickrichtung
- 14: Bewegung Bildinhalt durch Kamerabewegung
- 15: Relative Bewegung Zielpunkt/Blickrichtung

## Patentansprüche

1. Verfahren zum Ausrichten eines Kamerasystems auf ein Zielobjekt, wobei das Kamerasystem einen Bildsensor und eine Anzeigevorrichtung umfasst, wobei ein Anzeigebereich (12) der Anzeigevorrichtung wenigstens einem Teilbereich eines abbildbaren Bildbereichs (10) des Bildsensors entspricht, und wobei das Verfahren umfasst:
a) Bereitstellen (S1) eines Bildstroms des abbildbaren Bildbereichs (10), wobei im abbildbaren Bildbereich (10) ein Zielobjekt vorhanden ist;
b) Grobausrichten (S2) des Kamerasystems auf das Zielobjekt, umfassend eine Kompensation eines ersten Bewegungsanteils des Bildsensors in einem ersten Frequenzbereich; und
c) Feinausrichten des Kamerasystems auf das Zielobjekt, umfassend:
c1) Bestimmen (S3) einer zweidimensionalen Zielposition oder Blickrichtung (13);
c2) Bestimmen (S4) einer relativen Verschiebung der Zielposition oder Blickrichtung (13) aus einem zweiten Bewegungsanteil des Bildsensors in einem zweiten Frequenzbereich, der niedriger als der erste Frequenzbereich ist, und
c3) stabilisiertes Anzeigen (S5) des Zielobjekts im Anzeigebereich basierend auf der bestimmten relativen Verschiebung der Zielposition oder der Blickrichtung (13).

2. Verfahren nach Anspruch 1, wobei die zweidimensionale Zielposition (13) einer zweidimensionalen Bildposition des Zielobjekts im Bildstrom entspricht, oder wobei die zweidimensionale Zielposition (13) einer Markierung der zweidimensionalen Bildposition des Zielobjekts im Bildstrom entspricht.

3. Verfahren nach Anspruch 1 oder 2, weiter umfassend ein Messen der Bewegung des Bildsensors gegenüber einem Referenzkoordinatensystem.

4. Verfahren nach einem der Ansprüche 1 bis 3, weiter umfassend den Schritt:
b1) stabilisiertes Anzeigen des grobausgerichteten Bildstroms auf dem Anzeigebereich (12).

5. Verfahren nach einem der Ansprüche 1 bis 4, wobei der Schritt c1) umfasst:
i) initiales Bestimmen der zweidimensionalen Zielposition oder der Blickrichtung (13) im Bildstrom; und
ii) automatisches Bestimmen der zweidimensionalen Zielposition oder der Blickrichtung (13) im Bildstrom durch Kompensation des ersten Bewegungsanteils des Bildsensors im ersten Frequenzbereich.

6. Verfahren nach Anspruch 5, wobei das initiale Bestimmen umfasst:
- manuelles Bestimmen der zweidimensionalen Zielposition oder der Blickrichtung (13) im Bildstrom über
- eine Eingabe von Koordinaten;
- Anzeigen und Bestätigen im Anzeigebereich (12); oder
- Ausrichten des Bildsensors auf die Zielposition oder die Blickrichtung; oder
- automatisches Bestimmen der zweidimensionalen Zielposition oder der Blickrichtung (13) im Bildstrom, insbesondere über eine Datenschnittstelle.

7. Verfahren nach einem der Ansprüche 1 bis 6, wobei der Schritt c2) umfasst:
i) Übersetzung der Bewegung des Bildsensors auf eine Bewegung der Zielposition oder Blickrichtung (13); und
ii) Kontinuierliches Berechnen der relativen Verschiebung der Zielposition oder Blickrichtung (13) aus der Bewegung des Bildsensors.

8. Verfahren nach Anspruch 7, wobei die Übersetzung umfasst:
Umrechnen von wenigstens drei, und insbesondere von sechs Freiheitsgraden der Bewegung des Bildsensors einzeln gewichtet auf die zweidimensionale relative Verschiebung.

9. Verfahren nach Anspruch 8, wobei das Umrechnen entweder
- linear als absoluter Gesamtdrehwinkel bezogen auf eine Initialposition erfolgt, oder
- nicht-linear gewichtet mit einer aktuellen Beschleunigung des Bildsensors erfolgt.

10. Verfahren nach einem der Ansprüche 1 bis 9, weiter umfassend:
d) Anzeigen einer erforderlichen Bewegungsrichtung des Bildsensors zur Ausrichtung einer Achse auf das Zielobjekt.

11. Verfahren nach Anspruch 10, wobei der Schritt d) umfasst:
d1) Berechnen eines aktuellen Versatzes der Zielposition oder Blickrichtung (13) zur Achse; und
d2) Anzeige der erforderlichen Bewegungsrichtung.

12. Verfahren nach Anspruch 11, wobei die Anzeige akustisch oder visuell durch Einblendung von Information im Anzeigebereich (12) erfolgt.

13. Verfahren nach einem der Ansprüche 1 bis 12, wobei der erste Bewegungsanteil des Bildsensors im ersten Frequenzbereich ein hochfrequenter Bewegungsanteil ist, und/oder wobei der zweite Bewegungsanteil des Bildsensors im zweiten Frequenzbereich ein niederfrequenter Bewegungsanteil ist.

14. Kamerasystem, umfassend:
- einen Bildsensor;
- eine Anzeigevorrichtung, wobei ein Anzeigebereich (12) der Anzeigevorrichtung wenigstens einem Teilbereich eines abbildbaren Bildbereichs (10) des Bildsensors entspricht; und
- eine Bildverarbeitungsvorrichtung, die eingerichtet ist, um
- das Kamerasystem auf ein Zielobjekt im abbildbaren Bildbereich durch eine Kompensation eines ersten Bewegungsanteils des Bildsensors in einem ersten Frequenzbereich grobauszurichten, und
- das Kamerasystem auf das Zielobjekt feinauszurichten, wobei das Feinausrichten umfasst:
c1) Bestimmen einer zweidimensionalen Zielposition oder Blickrichtung (13);
c2) Bestimmen einer relativen Verschiebung der Zielposition oder Blickrichtung (13) aus einem zweiten Bewegungsanteil des Bildsensors in einem zweiten Frequenzbereich, der niedriger als der erste Frequenzbereich ist, und
c3) stabilisiertes Anzeigen (S5) des Zielobjekts im Anzeigebereich basierend auf der bestimmten relativen Verschiebung der Zielposition oder der Blickrichtung (13).

15. Kamerasystem nach Anspruch 14, wobei das Kamerasystem eingerichtet ist, um das Verfahren nach einem der Ansprüche 1 bis 13 auszuführen.
